# EUROPÄISCHE PATENTSCHRIFT

(11) **EP 2 238 206 B1**
(45) Veröffentlichungstag und Bekanntmachung des Hinweises auf die Patenterteilung: **01.04.2020**
(21) Anmeldenummer: 09705959.6
(22) Anmeldetag: 15.01.2009
(51) Int. Cl.: B60K 15/03, A01N 33/12, C23F 11/14, C09D 163/00, C09D 175/04

(54) **CHROMATFREIER KORROSIONSSCHUTZ FÜR KRAFTSTOFFTANKS**
CHROMATE-FREE CORROSION PROTECTION FOR FUEL TANKS
PROTECTION ANTICORROSION SANS CHROMATE POUR RÉSERVOIRS À CARBURANT

(30) Priorität: 28.01.2008 DE 102008006391
(43) Veröffentlichungstag der Anmeldung: 13.10.2010
(73) Patentinhaber: Mankiewicz Gebr. & Co. GmbH & Co KG, 21107 Hamburg (DE); Airbus Operations GmbH, 21129 Hamburg (DE)
(72) Erfinder: SCHRÖDER, Sven, 20099 Hamburg (DE); BECKER, Diana, 21629 Neu Wulmsdorf (DE); KÜVER, Jan, 28816 Stuhr (DE); RABENSTEIN, Andreas, 28359 Bremen (DE); KAUNE, Martin, 28213 Bremen (DE); WILKE, Yvonne, 28357 Bremen (DE); GEISTBECK, Matthias, 87719 Ottobrunn (DE); GERLACH Carmen, 3062 GC Rotterdam (NL); PIETZKER, Tanja, 28201 Bremen (DE); SCHRAMM, Ottmar, 27624 Drangstedt (DE)
(86) Internationale Anmeldenummer: PCT/DE2009/000030
(87) Internationale Veröffentlichungsnummer: WO 2009/094975

(56) Entgegenhaltungen:
- EP-A- 1 769 680
- EP-A1- 1 649 079
- DE-A1- 10 144 187
- US-A- 3 446 650
- US-A- 4 659 594

## Beschreibung

Die vorliegende Erfindung betrifft die Verwendung einer chromatfreien Zusammensetzung als Korrosionsschutzbeschichtung für Kraftstofftanks, insbesondere als Korrosionsschutzbeschichtung der Innenflächen.

Kraftstoffe oder Treibstoffe sind chemische Stoffe, deren Energieinhalt meistens durch Verbrennung zur Krafterzeugung oder zur Erzeugung eines Antriebes in technischen Systemen nutzbar gemacht wird. Kraftstoffe werden hauptsächlich in Fortbewegungsmitteln wie Fahrzeugen, Schiffen oder Flugzeugen eingesetzt, in denen sie in entsprechenden Tanks mittransportiert werden müssen. Flüssige Kraftstoffe wie beispielsweise Kerosin enthalten neben Kohlenwasserstoffen auch nennenswerte Mengen an Wasser, die im Kraftstoff suspendiert sind und sich vor allem am Tankboden sammeln. Das Wasser liegt auch als dünner Film auf der Tankinnenfläche, welche sich oberhalb des Kraftstoffspiegels befindet. Auch enthält die Grenzschicht zwischen Kraftstoff und Luft Wasser. Der Kontakt zwischen Wasser und den Oberflächen bzw. Innenflächen des Kraftstofftanks, welche üblicherweise aus Metall oder Metalllegierungen sind, führt in der Regel zu Korrosionserscheinungen.

Unter Korrosion wird die von der Oberfläche ausgehende, durch unbeabsichtigten chemischen oder elektrochemischen Angriff hervorgerufene, nachteilige und qualitätsmindernde Veränderung eines Werkstoffs insbesondere eines Metalls verstanden. Der Korrosionsschutz hat zum Ziel, die Geschwindigkeit der Korrosion zu mindern, wobei er in zwei große Gruppen eingeteilt wird, den aktiven und den passiven Korrosionsschutz. Der aktive Korrosionsschutz greift entweder am zu schützenden Werkstoff oder am angreifenden (korrosiven) Medium in den Korrosionsprozess ein. Durch die Methoden des passiven Korrosionsschutzes wird der zu schützende Werkstoff vom angreifenden Medium getrennt.

Kraftstofftanks, welche in Flugzeugen eingesetzt werden, sind aus Gewichtsgründen üblicherweise aus Aluminium oder Aluminiumlegierungen. Lange Zeit war es üblich, Bauteile aus Aluminium zu chromatieren. Bei der Chromatierung entstehen auf der Oberfläche des Aluminiums Schichten, welche die schwerlöslichen Oxihydrate von Aluminium-, Cr(III)- und Cr(VI)-Ionen enthalten. Durch diese so erzeugte Konversionsschicht oder Anodisierschicht ist das Metall auch ohne weitere Beschichtung vor Korrosion geschützt. Zur Verbesserung der Korrosionsbeständigkeit wird zusätzlich ein chromathaltiger Primer verwendet. Chromate sind jedoch hochgiftig und wirken schädigend sowohl auf die Umwelt als auch auf den Menschen. Inzwischen wird die Verwendung von Chromaten gesetzlich streng reguliert.

Daher ist es nun üblich, chromatfreie Korrosionsinhibitoren einzusetzen. Im Folgenden wird unter dem Begriff Korrosionsinhibitor ein Stoff oder Stoffsystem verstanden, das die Korrosion an einem Werkstoff hemmt. Unter Korrosionsschutzmittel wird ein Produkt wie ein Beschichtungsmittel, ein Lack, eine Lösung oder ähnliches verstanden, das den oder die Korrosionsinhibitoren enthält. Als Korrosionsinhibitoren werden üblicherweise Phosphate wie z.B. Zinkphosphat, Borate wie z.B. Zinkborat und Silikate wie z.B. Borsilikat verwendet.

Der Nachteil der chromatfreien Korrosionsschutzmittel ist jedoch das ungehinderte mikrobielle Wachstum, welches durch den Einsatz der giftigen Chromationen zwangsläufig unterbunden wurde. Die üblicherweise eingesetzten Korrosionsinhibitoren sind nicht nur erheblich weniger giftig, sondern können wie beispielsweise Polyphoshpate das mikrobielle Wachstum auch noch fördern. Mikroorganismen, insbesondere Bakterien und Pilze wie Schimmel und Hefen, wachsen an der Grenzfläche zwischen Wasser und Kraftstoff sowie an der inneren Tankoberfläche und bilden dabei sogenannte Biofilme aus. Solche Biofilme können sehr dick werden und unter Umständen regelrechte Matten bilden. Diese mikrobielle Verunreinigungen verursachen mechanische Blockaden und Verstopfungen in den Rücklaufsystemen und Kraftstofffiltern während des Betriebs der Maschinen, welche zur Erzeugung des Antriebs eingesetzt werden.

Neben den mechanischen Auswirkungen wirken die mikrobiellen Verunreinigungen bzw. Biofilme korrosiv auf die Tankinnenflächen. Dies wird als mikrobiell initiierte Korrosion MIC (Abkürzung für Microbiologically Induced Corrosion) bezeichnet. Die Mikroorganismen sind fest in den Biofilm verwachsen und vermehren sich vor allem an seiner Oberfläche. Organische Säuren, welche als Stoffwechselprodukte vieler dieser Mikroorganismen freigesetzt werden, ergeben lokale, saure pH-Werte, welche direkt zu korrosiven Vorgängen an der Oberfläche des Tankinnenraums führen.

In einem Bericht der International Air Transport Association wird die Wechselwirkung zwischen Mikroorganismen und der Oberfläche der Kraftstofftanks in den Flügeln bzw. Tragflächen der Flugzeuge folgendermaßen beschrieben: "... Mikroorganismen sind an einer galvanischen Reaktion beteiligt, wobei die Oberfläche eines Aluminiumflügels unter den Mikroorganismen als die Anode dient und die Mikroorganismen darüber eine kathodische Umgebung schaffen" (vgl. IATA International Air Transport Association: Guidance Material on Microbiological Contamination in Aircraft Fuel Tanks; 2. Auflage, 2005, Ref. No. 9680-02).

Um einen Ausfall der Maschinen insbesondere in Flugzeugen während des Fluges durch mikrobielle Verunreinigung zu verhindern, werden die Tankinnenflächen bisher mit den bekannten chromathaltigen Primern beschichtet, um eine antimikrobielle Wirkung zu erreichen. Auch das Restwasser wird regelmäßig aus den Tanks entfernt.

Darüber hinaus werden dem Kerosin selbst Biozide zugesetzt. Obwohl der bakterielle Angriff vor allem an oder in den Grenzflächen zwischen Kerosin und Wasser stattfindet, muß die Biozidkonzentration im gesamten Kerosin entsprechend hoch sein, um eine hinreichende Wirkung zur erzielen. Dies erhöht die Treibstoffkosten deutlich.

Antimikrobiell wirkende Beschichtungen sind aus dem Bereich der Schiffs- und Bootslacke als sogenannte Antifouling-Beschichtungen bekannt. So beschreibt US 5,173,110 eine Zusammensetzung für eine Antifouling-beschichtung für Schiffsrümpfe, Fischernetze und Holz, die eine organische Lösung eines Epoxyharzes, einen Epoxyhärter und ein nicht metallisches Algizid umfasst, das eine quartäre Ammoniumverbindung enthält, welche entweder Methylgruppen und zwei Alkylgruppen oder Methylgruppen, eine Alkyl- und eine Benzylgruppe aufweist. Dieses Algizid ist dabei in dem Harz eingekapselt und in der Lage, aus der Zusammensetzung durch Untertauchen ausgewaschen zu werden.

Diese Antifouling-Beschichtung hat jedoch keinerlei Schutzwirkung gegen Korrosion von Metall.

Es ist daher Aufgabe der vorliegenden Erfindung eine verbesserte, chromatfreie Beschichtung zur Verfügung zu stellen, wobei die Oberfläche eines Metalls insbesondere gegen mikrobiell induzierte Korrosion geschützt wird.

Die Aufgabe wird durch die Verwendung einer Zusammensetzung als Korrosionsschutzbeschichtung gemäß Anspruch 1 gelöst. Bevorzugte Ausführungsformen sind Gegenstand der Unteransprüche und der Beschreibung.

Die erfindungsgemäße eingesetzte Zusammensetzung umfasst zumindest ein Bindemittel, zumindest einen Härter, zumindest einen Korrosionsinhibitor und zumindest eine quartäre Ammoniumverbindung ausgewählt aus der Gruppe enthaltend lineare Alkylammoniumverbindungen, Imidazoliumverbindungen und Pyridiniumverbindungen, wobei die Zusammensetzung Ammoniumverbindungen in einer Menge von 0,1 bis 5 Gew.-% und chromatfreie Korrosionsinhibitoren in einer Menge von 05, bis 30 Gew.-%, jeweils bezogen auf das Gesamtgewicht der Zusammensetzung, enthält. Übliche Korrosionsschutzmittel, welche als Beschichtung auf eine zu schützende Oberfläche aufgebracht werden, basieren auf Bindemittel-Härter-Systemen, welche wasserverdünnbar, lösemittelverdünnbar oder lösemittelfrei sein können. Bevorzugt werden 2-Komponenten-Systeme eingesetzt, welche erst vor der Applikation auf eine Metalloberfläche gemischt werden. Dabei enthält die eine Komponente, der sogenannte Stammlack, das Bindemittel und die andere Komponente den Härter. Übliche Bindemittel sind beispielsweise Epoxidharze oder hydroxyfunktionelle Polymere, Polyole, deren reaktive Gruppen, mit den als Härter eingesetzten Substanzen wie beispielsweise Aminen oder Isocyanaten vernetzt werden und so eine feste Schicht ausbilden.

Die zur Konservierung von applizierten und ausgehärteten Beschichtungsfilmen eingesetzte Verbindungen werden als Filmkonservierungsmittel bezeichnet. Sie sollen vor allem den Bewuchs der beschichteten Oberflächen durch Pilze und Algen reduzieren oder verhindern. Zur Filmkonservierung werden üblicherweise Fungizide und Herbizide wie z.B. Benzimidazole, Carbamate und Dithiocarbamate, N-Halogenalkylthio-Verbindungen, 2-n-Octyl-4-isothiazolin-3-on oder halogenierte Diurone eingesetzt.

Der Einsatz von quartären Aminen in niedrigen Konzentrationen als Topfkonservierungsmittel in flüssigen Beschichtungsstoffen ist bekannt, um den mikrobiellen Abbau wasserbasierter Bindemitteldispersionen zwischen der Herstellung und der Verarbeitung des Beschichtungsstoffes zu verhindern.

Der Einsatz von antimikrobiell wirksamen Verbindungen in Kombination mit Korrosionsinhibitoren zum Korrosionsschutz von lackierten Substraten wie z.B. Aluminium oder Stahl ist bisher jedoch nicht bekannt. Überraschend wurde nun festgestellt, dass der Einsatz von quartären Ammoniumverbindungen zusammen mit chromatfreien Korrosionsinhibitoren die mikrobiell induzierte Korrosion vermindert bzw. unterdrückt.

Erfindungsgemäß werden Bindemittelsysteme auf der Basis von Epoxidharzen oder Polyurethanharzen eingesetzt.

In einer bevorzugten Ausführungsform der vorliegenden Erfindung werden als Bindemittel ein oder mehrere Epoxidharze eingesetzt, welche aus der Gruppe Bisphenol-A-Harze, Bisphenol-F-Harze, Phenol-Novolake, Kresol-Novolak-Glycidylether, epoxidierte Cycloolefine, aromatische Glycidylverbindungen, N-Glycidylverbindungen aus Heterocyclen und Aminen, Glyoxaltetraphenoltetraglycidylether, aliphatische Glycidylether, cycloaliphatische und aromatische Glycidylether und Glycidylester ausgewählt werden. Dabei können nieder- und mittelviskose flüssige Epoxidharztypen, halbfeste und feste Epoxidharztypen sowie deren Gemische eingesetzt werden.

In einer besonders bevorzugten Ausführungsform der Erfindung wird ein Gemisch aus Bisphenol-A- und Bisphenol-F-Harzen eingesetzt. Erfindungsgemäß vorteilhaft ist zumindest ein Bisphenol-A-Harz ausgewählt aus flüssigen Bisphenol-A-Epoxidharzen mit einen Epoxidgehalt zwischen 5,10 bis 5,7 mol/kg und einem Epoxidequivalent zwischen 175 bis 185 g/mol, halbfesten Bisphenol-A-Epoxidharzen mit einen Epoxidgehalt zwischen 3,7 bis 4,35 mol/kg und einem Epoxidequivalent zwischen 230 bis 270 g/mol und festen Bisphenol-A-Epoxidharzen mit einen Epoxidgehalt zwischen 0,16 bis 2,25 mol/kg und einem Epoxidequivalent zwischen 230 bis 6000 g/mol.

**Tabelle 1: Gruppe der erfindungsgemäß bevorzugten Bisphenol-A-Epoxidharzen**

| Typenbezeichnung | Epoxidgehalt [mol / kg] | Epoxidequivalent [g / mol] |
|---|---|---|
| Flüssig, niederviskos | 5,25 - 5,70 | 175 - 190 |
| Flüssig, mittelviskos | 5,10 - 5,40 | 185 - 195 |
| Halbfest | 3,70 - 4,35 | 230 - 270 |
| Fest, Typ 1 | 1,80 - 2,25 | 450 - 550 |
| Fest, Typ 2 | 1,45 - 1,80 | 550 - 700 |
| Fest, Typ 4 | 1,05 - 1,25 | 800 - 950 |
| Fest, Typ 7 | 0,40 - 0,62 | 1600 - 2500 |
| Fest, Typ 9 | 0,25 - 0,40 | 2500 - 4000 |
| Fest, Typ 10 | 0,16 - 0,25 | 4000 - 6000 |
| Hochmolekular | < 0,05 | > 20 000 |
| Phenoxyharze | < 0,01 | > 100 000 |

Erfindungsgemäß vorteilhaft ist zumindest ein Bisphenol-F-Harz ausgewählt aus flüssigen Bisphenol-F-Epoxidharzen mit einen Epoxidgehalt zwischen 5,6 bis 6,1 mol/kg und einem Epoxidequivalent zwischen 158 bis 175 g/mol und festen Bisphenol-F-Epoxidharzen mit einen Epoxidgehalt zwischen 6 bis 6,3 mol/kg und einem Epoxidequivalent zwischen 158 bis 167 g/mol.

**Tabelle 2: Gruppe der erfindungsgemäß bevorzugten Bisphenol-F-Epoxidharzen**

| Typenbezeichnung | Epoxidgehalt [mol / kg] | Epoxidequivalent [g / mol] |
|---|---|---|
| Fest | 6,0 - 6,3 | 158 - 167 |
| Flüssig, niederviskos | 5,7 - 6,1 | 164 - 175 |
| Flüssig, mittelviskos | 5,6 - 6,0 | 167 - 179 |

In einer weiteren bevorzugten Ausführungsform enthält das erfindungsgemäße Korrosionsschutzmittel neben den Epoxidharzen ein oder mehrere geeignete Härter aus der Gruppe der Polyamine. In einer besonders bevorzugten Ausführungsform ist mindestens ein Härter aus der Gruppe der Polyethylenpolyamine wie z.B. Ethylendiamin (EDA), Diethylentriamin (DETA), Triethylentetramin (TETA), Tetraethylenpentamin (TEPA), Pentaethylenhexamin (PEHA), 1,3-Pentandiamin (DAMP), 2-Methylpentamethylendiamin (MPMDA), Dipropylentriamin (DPTA), Diethylaminopropylamin (DEAPA), Trimethylhexamethylendiamin (TMD), Polyoxypropylendiamine (JEFFAMINE D Typen) oder Polyoxypropylentriamin (JEFFAMINE T Typen), Polyetherpolyamine wie z.B. Polyoxyethylenpolyamine (PEGDA), Polyoxypropylenpolyamine (PPGDA), Polytetrahydrofuranpolyamine (PTHFDA) oder Butandioletherdiamin (BDA), Propylenamine wie z.B. Propylendiamin (PDA), Dipropylentriamin (DPTA) oder N-Aminopropylcyclohexylamin (NAPCHA), Alkylendiamine wie z.B. Hexamethylendiamin (HMDA), Trimethylhexamethylendiamin (TMD) oder Methylpentamethylendiamin (MPDA), cycloaliphatische Amine wie z.B. Tricyclododecandiamin (TCD), N-Aminoethylpiperazin (NAEP), Isophorondiamin (IPD) oder Diaminocyclohexan (DCH), aromatische Amine wie z.B. Diaminodiphenylmethan (DDM) oder Diaminodiphenylsulfon (DDS), araliphatische Amine wie z.B. m-Xylylendiamin (mXDA) und deren Modifikationen wie beispielsweise Polyaminoamide, Mannichbasen und Epoxidaddukte gewählt.

Erfindungsgemäß bevorzugt ist der Einsatz von Epoxidharzen und Aminen im molaren Verhältnis der Epoxidgruppen zu N-H-Gruppen (EP:N-H) von 1:0,6 bis 1:1,2, besonders bevorzugt 1:0,7 bis 1:1,1, ganz besonders bevorzugt 1:0,8 bis 1:0,95.

In einer weiteren bevorzugten Ausführungsform der vorliegenden Erfindung werden als Bindemittel ein oder mehrere hydroxyfunktionelle Polymere und/oder Polyole eingesetzt, die mit monomeren, oligomeren oder polymeren Isocyanaten als Härter vernetzt werden.

Geeignete Isocyanate sind alle üblicherweise zur Härtung von Beschichtungsstoffen eingesetzte Isocyanate wie zum Beispiel Diphenylmethandiisocyanat (MDI) sowie Oligomere oder Polymere auf Basis von Toluylendiisocyanat (TDI), Diphenylmethandiisocyanat (MDI), Hexamethylendiisocyanat (HDI), Isophorondiisocyanat (IPDI), 4,4'-Diisocyanatodicyclohexylmethan (HMDI), m-Xylylendiisocyanat (XDI), 1,6-Diisocyanato-2,2,4(2,4,4)-trimethylhexan (TMDI) oder Tetramethylxylylendiisocyanat (TMXDI). Darüber hinaus sind auch isocyanatofunktionelle Reaktionsprodukte von Diisocyanaten mit ein- oder mehrwertigen Alkoholen wie beispielsweise das Reaktionsprodukt von Trimethylolpropan mit einem Überschuß an Toluylendiisocyanat (z.B. unter dem Handelsnamen "Desmodur L" der Bayer AG) geeignet. Ebenso geeignet sind blockierte Polyisocyanate und mikroverkapselte Polyisocyanate.

Geeignete Polyole sind bevorzugt Polyacrylat-Polyole, Polyester-Polyole, Polyether-Polyole, Polycarbonate-Polyole sowie Polycaprolaotone. Ebenso geeignet sind wässrige Dispersionen von hydroxyfunktionellen Polymeren auf Basis von Polyacrylat, Polyester, Polyether, Polycarbonat. Besonders geeignet sind sind wässrige Dispersionen von hydroxyfunktionellen Polymeren auf Basis von Polyharnstoff oder Polyurethan.

In erfindungsgemäßen wasserverdünnbaren Beschichtungsstoffen werden wassermischbare Polyole oder Polymerdispersionen und Isocyanate beispielsweise im molaren Verhältnis der Hydroxyl-Gruppen zu Isocyanat-Gruppen von 1:0,8 bis 1:7,5, bevorzugt 1:1 bis 1:6, besonders bevorzugt 1:1,5 bis 1:5 eingesetzt.

In erfindungsgemäßen lösemittelbasierenden Beschichtungsstoffen werden Polyole und Isocyanate beispielsweise im molaren Verhältnis der Hydroxyl-Gruppen zu Isocyanat-Gruppen von 1:0,6 bis 1:2, bevorzugt 1:0,8 bis 1:1,6, besonders bevorzugt 1:1 bis 1:1,5, eingesetzt.

Erfindungsgemäß werden ein oder mehrere quartäre Ammoniumverbindungen eingesetzt. Um eine hinreichende antimikrobielle Wirkung des erfindungsgemäßen Korrosionsschutzmittels zu erreichen, werden mindestens 0,1 Gew.-% bezogen auf das Gesamtgewicht der Zusammensetzung an quartären Ammoniumverbindungen eingesetzt. Um eine ausreichende Verarbeitbarkeit und Stabilität der Zusammensetzung beizubehalten, werden höchstens 5 Gew.-% an quartären Ammoniumverbindungen eingesetzt. Die Ammoniumverbindungen werden daher im Bereich von 0,1 bis 5 Gew.-%, bevorzugt im Bereich von 0,2 bis 2 Gew.%, ingesetzt.

Die erfindungsgemäß eingesetzten quartären Ammoniumverbindungen sind ausgewählt aus der Gruppe enthaltend lineare Alkylammoniumverbindungen der Formel I 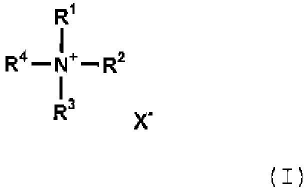 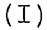 worin R¹, R², R³ und R⁴ jeweils ein Alkylrest mit 1 bis 20 Kohlenstoffatomen und X ein Halogen oder Alkylsulfat ist, Imidazoliumverbindungen der Formel II 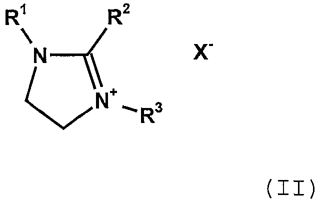 worin R¹, R² und R³ jeweils ein Alkylrest mit 1 bis 20 Kohlenstoffatomen und X ein Halogen oder Alkylsulfat ist, und Pyridiniumverbindungen der Formel III 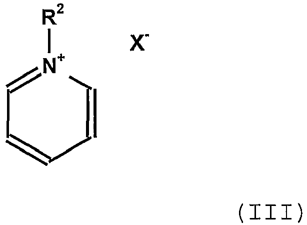 worin R² ein Alkylrest mit 1 bis 20 Kohlenstoffatomen und X ein Halogen oder Alkylsulfat ist.

Geeignete quartäre Ammoniumverbindungen sind beispielsweise Benzyl-C12-18-alkyldimethylchloride, Benzyl-C12-16-alkyldimethylchloride, Di-C8-10-alkyldimethylchloride, Benzyl-C12-18-alkyldimethylsalze mit 1,2-Benzisothiazol-3(2H)-on-1,1-dioxid, N, N'-(Decan-1,10-diyldi-1(4H)-pyridyl-4-yliden)bis(octylammonium)dichlorid, 1,3-Didecyl-2-methyl-1H-imidazoliumchlorid, 1-[1,3-Bis(hydroxymethyl)-2,5-dioxoimidazolidin-4-yl]-1,3-bis(-hydroxymethyl)harnstoff/Diazolidinylurea, Benzyl-C12-14-alkyldimethylchloride, C12-14-Alkyl[(ethylphenyl)methyl]dimethylchloride, [2-[[2-[(2-Carboxyethyl)(2-hydroxyethyl)amino]ethyl]amino]-2-oxoethyl]-kokosalkyldimethylhydroxide und dessen innere Salze, 1,3-Dichlor-5-ethyl-5-methylimidazolidin-2,4-dion, Reaktionsprodukte aus Glutaminsäure und N-(C12-14-alkyl)-propylendiamin, 1-(6-Chlorpyridin-3-ylmethyl)-Nitroimidazolidin-2-ylidenamin (Handelsname: Imidacloprid), Polymere aus N-Methylmethanamin (EINECS 204-697-4) mit (Chlormethyl)oxiran (EINECS203-439-8)/Polymeres quatäres Ammoniumchlorid, (Benzylalkyldimethyl (Alkyl aus C8-C22, gesättigt und ungesättigt, und Talgalkyl, Kokosalkyl und Soyaalkyl), Chloride, Bromide oder Hydroxide)/ BKC, (Dialkyldimethyl (Alkyl aus C6-C18, gesättigt und ungesättigt, und Talgalkyl, Kokosalkyl und Soyaalkyl), Chloride, Bromide oder Methylsulphate)/DDAC, (Alkyltrimethyl (Alkyl aus C8-C18, gesättigt und ungesättigt, und Talgalkyl, Kokosalkyl und Soyaalkyl) Chloride, Bromide oder Methylsulphate)/TMAC.

Erfindungsgemäß bevorzugt sind Tetraalkylammoniumalkylsulfate, Tetralkylammoniumhalogenide, Trialkylimidazoliumhalogenide insbesondere Dodecyldimethylethylammoniumethylsulfat, Dodecyldimethylethylammoniumchlorid, und Dodecyldimethylethylammoniumbromid
In einer weiteren bevorzugten Ausführungsform der vorliegenden Erfindung werden ein oder mehrere chromatfreie Korrosionsinhibitoren eingesetzt, welche aus der Gruppe der Phosphate wie z.B. Zinkphosphate, Zinkorthosphosphate, Calciumphosphat, Dicalciumphosphat, Bariumphosphat, Bariumborophosphat, Aluminiummonophosphat, Polyphosphat oder Strontium-Aluminium-Polyphosphat, der Silikate wie z.B. Strontiumphosphosilikate, Zinkphosphosilikat, Calciumphosphosilikate, Bariumphosphosilikate, Calciumborosilikat oder Calciummetasilikat, der Borate wie z.B. Zinkborat, Bariummetaborat, Aluminiumborat, Kaliumborat, Calciumborat oder Magnesiumborat, der Molybdate wie z.B. Calciummolybdat oder Zinkmolybdat, der organischen Inhibitoren wie z.B. organische Metallkomplexe oder Polyanilin, sowie der Oxide wie z.B. Magnesiumoxid oder Zinkoxid.

Um eine hinreichende korrosionshemmende Wirkung der erfindungsgemäßen Zusammensetzung zu erreichen, werden mindestens 0,5 Gew.-% bezogen auf das Gesamtgewicht der Zusammensetzung an Korrosionsinhibitoren eingesetzt. Um eine ausreichende Verarbeitbarkeit und Stabilität der Zusammensetzung beizubehalten, werden höchstens 30 Gew.-% eingesetzt. Es ist bevorzugt die Korrosionsinhibitoren im Bereich von 2,5 bis 15 Gew.%, besonders bevorzugt im Bereich von 5 bis 10 Gew.-%, eingesetzt.

In einer weiteren Ausführungsform weist die erfindungsgemäße Zusammensetzung weitere dem Fachmann geläufige Additive auf wie beispielsweise Antiabsetzmittel, Emulgatoren, Glanzverbesserungsmittel, Haftverbesserer, Konservierungsmittel, Mattierungsmittel, Verlaufsadditive, Rheologieadditive, Entschäumer, Entlüfter, Netz- und Dispergieradditive, Substratbenetzungsmittel oder Oberflächenadditive.

In einer weiteren Ausführungsform weist die erfindungsgemäße Zusammensetzung Pigmente und Füllstoffe auf wie sie dem Fachmann geläufig sind.

Die erfindungsgemäße Korrosionschutzbeschichtung für Kraftstofftanks wird bevorzugt für Tanks aus Metall, insbesondere aus Aluminium oder Aluminiumlegierungen eingesetzt.

In einem weiteren Aspekt betrifft die vorliegende Erfindung eine antimikrobielle, korrosionshemmende Beschichtung, welche aus einer erfindungsgemäßen Zusammensetzung herstellbar ist, indem die erfindungsgemäße Zusammensetzung auf einen Oberfläche insbesondere eine Metalloberfläche aufgetragen wird und anschließend ausgehärtet wird. Zur Auftragung ist jede dem Fachmann geläufige Methode wie beispielsweise Sprühen, Streichen oder Rollen geeignet. Die Aushärtung kann z. B. bei Umgebungstemperatur, erhöhter Temperatur oder unter Einwirkung von Infrarotstrahlung stattfinden.

### Beispiele

Es wurden Zusammensetzungen gemäß der vorliegenden Erfindung und Vergleichszusammensetzungen mit üblichen Konservierungsmitteln auf der Bindemittelbasis von Epoxidharz- und Polyurethanharzsystemen untersucht. Es wurden dabei wasserverdünnbare und lösemittelverdünnbare Systeme untersucht.

### Beispiel 1: Erfindungsgemäße Beispielrezepturen

### Beispiel 1a: Wasserverdünnbares Epoxidharzsystem

**Zusammensetzung der Stammkomponente:**

| **Inhaltsstoff** | **Anteil in Gew.-%** |
|---|---|
| Gemisch aus Epoxidharz auf Basis von Bisphenol-A und Bisphenol-F | 20 |
| Wasser | 20 |
| Korrosionsinhibitor: Zinkphosphat | 5 |
| Pigment und Füllstoff | 32 |
| quartäre Ammoniumverbindung: Dodecyldimethylethylammoniumethylsulfat | 2 |
| Additive | 11 |
| Lösemittel | 10 |

Als Härter wurde ein Epoxy-Amin-Addukt eingesetzt. Das Mischungsverhältnis Stammlack zu Härter wurde so gewählt, daß das molare Verhältnis von Epoxidgruppen zu N-H-Gruppen (EP:NH) gleich 1:0.95 betrug.

### Beispiel 1b: Lösemittelverdünnbares Epoxidharzsystem

**Zusammensetzung der Stammkomponente:**

| **Inhaltsstoff** | **Anteil in Gew.-%** |
|---|---|
| Bisphenol-A-basierendes Epoxidharz | 35 |
| Lösemittel | 10 |
| Korrosionsinhibitor: Aluminiumtriphosphat | 10 |
| Pigment und Füllstoff | 40 |
| Quartäre Ammoniumverbindung: Dodecyldimethylethylammoniumethylsulfat | 3 |
| Additive | 2 |

Als Härter wurde ein aliphatisches Diamin eingesetzt. Das Mischungsverhältnis Stammlack zu Härter wurde so gewählt, daß das molare Verhältnis von Epoxidgruppen zu N-H-Gruppen (EP:NH) gleich 1:0.95 betrug.

### Beispiel 1c: Wasserverdünnbares Polyurethansystem

**Zusammensetzung der Stammkomponente:**

| **Inhaltsstoff** | **Anteil in Gew.-%** |
|---|---|
| Wässerige, aliphatische hydroxylgruppenhaltige Polyurethanharzdispersion mit einem Festkörpergehalt von 40% bezogen auf die Masse der Dispersion | 25 |
| Wasser | 20 |
| Additive | 2 |
| Korrosionsinhibitor: Zinkphosphat | 8 |
| Pigment und Füllstoff | 40 |
| Quartäre Ammoniumverbindung: Dodecyldimethylethylammoniumethylsulfat | 5 |

Als Härter wurde ein hydrophiliertes oligomeres Isocyanat auf Basis von HDI und IPDI eingesetzt. Das Mischungsverhältnis Stammlack zu Härter wurde so gewählt, daß das molare Verhältnis von Hydroxylgruppen zu Isocyanatgruppen (OH:NCO) gleich 1:7 betrug.

### Beispiel 1d: Lösemittelverdünnbares Polyurethansystem

**Zusammensetzung der Stammkomponente:**

| **Inhaltsstoff** | **Anteil in Gew.-%** |
|---|---|
| Gemisch aus verzweigtem Polyether-Polyol und verzweigtem Polyether/PolyesterPolyol | 40 |
| Lösemittel | 10 |
| Additive | 2 |
| Korrosionsinhibitor: Zinkphosphat | 8 |
| Pigment und Füllstoff | 35 |
| quartäre Ammoniumverbindung: Dodecyldimethylethylammoniumethylsulfat | 5 |

Als Härter wurde ein oligomeres Isocyanat auf Basis von HDI eingesetzt. Das Mischungsverhältnis Stammlack zu Härter wurde so gewählt, daß das molare Verhältnis von Hydroxylgruppen zu Isocyanatgruppen (OH:NCO) gleich 1:1,3 betrug.

### Beispiel 2: Vergleichsbeispiele

### Beispiel 2a: wasserverdünnbares Epoxidharzsystem

**Zusammensetzung der Stammkomponente:**

| **Inhaltsstoff** | **Anteil in Gew.-%** |
|---|---|
| Gemisch aus Epoxidharz auf Basis von Bisphenol-A und Bisphenol-F | 20 |
| Wasser | 20 |
| Korrosionsinhibitor: Zinkphosphat | 5 |
| Pigment und Füllstoff | 32 |
| Additive | 11 |
| Lösemittel | 10 |

Als Härter wurde ein Epoxy-Amin-Addukt eingesetzt. Das Mischungsverhältnis Stammlack zu Härter wurde so gewählt, daß das molare Verhältnis von Epoxidgruppen zu N-H-Gruppen (EP:NH) gleich 1:0.95 betrug.

### Beispiel 2b: Lösemittelverdünnbares Epoxidharzsystem

**Zusammensetzung der Stammkomponente:**

| **Inhaltsstoff** | **Anteil in Gew.-%** |
|---|---|
| Bisphenol-A-basierendes Epoxidharz | 35 |
| Lösemittel | 10 |
| Korrosionsinhibitor: Aluminiumtriphosphat | 10 |
| Pigment und Füllstoff | 40 |
| Additive | 2 |

Als Härter wurde ein aliphatisches Diamin eingesetzt. Das Mischungsverhältnis Stammlack zu Härter wurde so gewählt, daß das molare Verhältnis von Epoxidgruppen zu N-H-Gruppen (EP:NH) gleich 1:0.95 betrug.

### Beispiel 2c: Wasserverdünnbares Polyurethansystem

**Zusammensetzung der Stammkomponente:**

| **Inhaltsstoff** | **Anteil in Gew.-%** |
|---|---|
| Wässerige, aliphatische hydroxylgruppenhaltige Polyurethanharzdispersion mit einem Festkörpergehalt von 40% bezogen auf die Masse der Dispersion | 25 |
| Wasser | 20 |
| Additive | 2 |
| Korrosionsinhibitor: Zinkphosphat | 8 |
| Pigment und Füllstoff | 40 |

Als Härter wurde ein hydrophiliertes oligomeres Isocyanat auf Basis von HDI und IPDI eingesetzt. Das Mischungsverhältnis Stammlack zu Härter wurde so gewählt, daß das molare Verhältnis von Hydroxylgruppen zu Isocyanatgruppen (OH:NCO) gleich 1:7 betrug.

### Beispiel 2d: Lösemittelverdünnbares Polyurethansystem

**Zusammensetzung der Stammkomponente:**

| **Inhaltsstoff** | **Anteil in Gew.-%** |
|---|---|
| Gemisch aus verzweigtem Polyether-Polyol und verzweigtem Polyether/PolyesterPolyol | 40 |
| Lösemittel | 10 |
| Additive | 2 |
| Korrosionsinhibitor: Zinkphosphat | 8 |
| Pigment und Füllstoff | 35 |

Als Härter wurde ein hydrophiliertes oligomeres Isocyanat auf Basis von HDI und IPDI eingesetzt. Das daß das molare Verhältnis von Hydroxylgruppen zu Isocyanatgruppen (OH:NCO) gleich 1:7 betrug.

### Beispiel 3: Mikrobielle Untersuchung

Mikroorganismen wurden aus einer Kerosinprobe abfiltriert und taxonomisch bestimmt. Es wurden folgende Pilze bestimmt: *Alternaria alternata, Aspergillus niger, Aspergillus versicolor, Botrytis cinerea, Cladosporium cladosporioides, Cladosporiun herbarum, Epicoccum nigrum, Paecilomyces variotii, Penicillinum brevicompactum, Penicillium expansum, Penicillium rugulosum, Penicillium spinulosum* und *Penicilliium variabile* sowie nicht identifizierte Hefen. Diese Isolate wurden in den folgenden mikrobiellen Untersuchungen eingesetzt.

### Beispiel 3a: Untersuchungen zur antimikrobiellen Wirkung

In dieser Untersuchung wurden die mit den entsprechenden Beispielrezepturen beschichteten Prüfkörper den oben genannten Pilzen für eine vorgegebene Zeitspanne unter vorgegebenen Temperatur- und Feuchtigkeitsbedingungen ausgesetzt (inkubiert). Die Prüfkörper wurden Pilzsporen ausgesetzt, die auf einem ihr Wachstum ermöglichenden Nährboden verteilt waren. Nach der Inkubation wurde das Ausmaß des Bewuchses auf den Prüfkörpern visuell bestimmt, wobei die Parameter nach einem numerischen Bewertungsverfahren (s. Tabelle 3) festgelegt wurden.

**Tabelle 3: Bewertungstabelle**

| | |
|---|---|
| 0 | kein Bewuchs zu erkennen, auch nicht unter dem Mikroskop |
| 1 | Bewuchs mit dem bloßen Auge kaum, unter dem Mikroskop deutlich zu erkennen (50-fach vergrößert) |
| 2 | leichter Bewuchs, bedeckt weniger als 25 % des Prüfkörpers |
| 3 | Bewuchs bedeckt mehr als 25 % der Oberfläche des Prüfkörpers |

### Durchführung:

Die Prüfkörper wurden durch einseitiges Beschichten von 40 x 50 mm großen Aluminiumblechabschnitten (Material: AA2024 clad mit Chromsäureanodisierung), mit den zu untersuchenden Rezepturen erhalten. Unter aseptischen Bedingungen wurde eine hinreichenden Menge Agar-Vollmedium und kerosinhaltiges Agarmedium in Petrischalen gegossen, so dass ein Flüssigkeitsspiegel mit einer Tiefe von 5 bis 10 mm erhalten wurde. Die Prüfkörper wurden einzeln auf das erstarrte Agarmedium in den Petrischalen aufgelegt. Auf die Prüfkörper- und Mediumoberfläche wurde eine entsprechende Menge Impfsuspension, welche Sporen der obengenannten Mikroorganismen enthielt, verteilt. Die Petrischalen wurden verschlossen und etwa 4 Wochen bei 25 ± 1 °C und bei einer relativen Luftfeuchte von über 90 % (wie sie üblicherweise in geschlossenen Petrischalen erreicht wird) inkubiert.

Tabelle 4 zeigt die Ergebnisse der anschließenden visuellen Bewertung des Bewuchses auf den Prüfkörpern.

### Beispiel 3b: Tanksimulation

Hierfür wurden die Prüfkörper (150x 80 mm), welche wie in Beispiel 3a beschrieben jeweils einseitig mit zu untersuchenden Rezepturen beschichtet wurden, in einen Glasbehälter gestellt, der auf 1 l Wasser 2 ml Kerosin enthielt. Die Prüfkörper wurden anschließend mit einer 0,1 % Hefeextraktlösung besprüht, um eine biologische Verunreinigung nachzuahmen. Nach dem Trocknen wurde eine Suspension der oben genannten Pilze auf die Oberfläche der Prüfkörper aufgesprüht. Anschließend wurden die Prüfkörper in dem Glasbehälter 4 Wochen lang inkubiert.

Nach der Inkubation wurde das Ausmaß des Bewuchses auf den Prüfkörpern visuell bestimmt, wobei die Parameter nach dem oben genannten numerischen Bewertungsverfahren (s. Tabelle 3) festgelegt wurden. In Tabelle 4 sind auch die Ergebnisse dieser Untersuchung zusammengefasst.

**Tabelle 4: Testergebnisse**

| Test | Beispiel | | | | Vergleichsbeispiel | | | |
|---|---|---|---|---|---|---|---|---|
| | 1a | 1b | 1c | 1d | 2a | 2b | 2c | 2d |
| Antimikrobielle Wirksamkeit (Beispiel 3a) | 0 | 1 | 0 | 0 | 3 | 3 | 3 | 2 |
| Tanksimulation (Beispiel 3b) | 0 | 0 | 0 | 0 | 3 | 2 | 2 | 3 |

## Patentansprüche

1. Verwendung einer Zusammensetzung als Korrosionsschutzbeschichtung für Kraftstofftanks, **dadurch gekennzeichnet, dass** die Zusammensetzung enthält
- mindestens ein Bindemittel ausgewählt aus Polyolen, hydroxyfunktionellen Polymeren oder Epoxidharzen,
- mindestens einen Härter,
- mindestens einen Korrosionsinhibitor ausgewählt aus der Gruppe enthaltend Phosphate, Silikate, Borate, Molybdate, organische Inhibitoren und Oxide,
- und mindestens eine quartäre Ammoniumverbindung ausgewählt aus der Gruppe enthaltend lineare Alkylammoniumverbindungen der Formel I 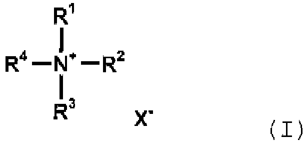 worin R¹, R², R³ und R⁴ jeweils ein Alkylrest mit 1 bis 20 Kohlenstoffatomen und X ein Halogen oder Alkylsulfat ist, Imidazoliumverbindungen der Formel II 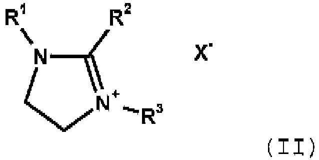 worin R¹, R² und R³ jeweils ein Alkylrest mit 1 bis 20 Kohlenstoffatomen und X ein Halogen oder Alkylsulfat ist,
und Pyridiniumverbindungen der Formel III 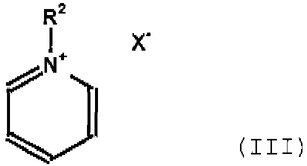 worin R² ein Alkylrest mit l bis 20 Kohlenstoffatomen und X ein Halogen oder Alkylsulfat ist, wobei die Zusammensetzung eine Menge an quartären Ammoniumverbindungen von 0,1 bis 5 Gew.-% und eine Menge an Korrosionsinhibitoren von 0,5 bis 30 Gew.-% jeweils bezogen auf das Gesamtgewicht der Zusammensetzung enthält.

2. Verwendung der Zusammensetzung nach Anspruch 1, **dadurch gekennzeichnet, dass** die Zusammensetzung eine Menge an Korrosionsinhibitor von 2,5 bis 15 Gew.-%, bevorzugt 5 bis 10 Gew.-%, bezogen auf das Gesamtgewicht der Zusammensetzung enthält.

3. Verwendung der Zusammensetzung nach Anspruch 1 oder 2, **dadurch gekennzeichnet, dass** die Zusammensetzung zumindest ein Polyol enthält, welches ausgewählt ist aus der Gruppe enthaltend Polyacrylat-Polyole, Polyester-Polyole, Polyether-Polyole, Polycarbonat-Polyole und Polycaprolactone.

4. Verwendung der Zusammensetzung nach Anspruch 1 oder 2, **dadurch gekennzeichnet, dass** die Zusammensetzung zumindest ein hydroxyfunktionelles Polymer enthält, welches ausgewählt ist aus der Gruppe der Polyacrylate, Polyester, Polyether, Polycarbonate, Polyharnstoffe und Polyurethane.

5. Verwendung der Zusammensetzung nach Anspruch 1 oder 2, **dadurch gekennzeichnet, dass** die Zusammensetzung zumindest ein Epoxidharz enthält, welches ausgewählt ist aus der Gruppe enthaltend Bisphenol-A-Harze, Bisphenol-F-Harze, Phenol-Novolake, Kresol-Novolak-Glycidylether, epoxidierte Cycloolefine, aromatische Glycidylverbindungen, N-Glycidylverbindungen aus Heterocyclen und Aminen, Glyoxaltetraphenoltetraglycidylether, aliphatische Glycidylether, cycloaliphatische Glycidylether und aromatische Glycidylether.

6. Verwendung der Zusammensetzung nach einem der Ansprüche 1 bis 5 als Korrosionsschutzbeschichtung für Kraftstofftanks aus Aluminium oder Aluminiumlegierungen.

7. Verwendung der Zusammensetzung nach Anspruch 6 als Innenbeschichtung.

## Claims

1. The use of a composition as an anticorrosive coating for fuel tanks, **characterized in that** the composition contains
- at least one binding agent selected from polyols, hydroxy functional polymers or epoxy resins,
- at least one curing agent,
- at least one corrosion inhibitor selected from the group consisting of phosphates, silicates, borates, molybdates, organic inhibitors and oxides,
- and at least one quaterny ammonium compound selected from the group consisting of linear alkylammonium compounds of Formula I 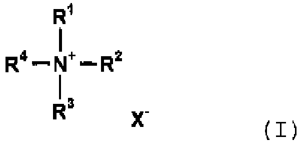 in which R¹, R², R³ and R⁴ each denote an alkyl group containing from 1 to 20 carbon atoms and X denotes a halogen or an alkyl sulfate,
imidazolium compounds of Formula II 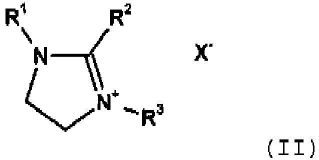 in wich R¹, R² and R³ each denote an alkyl group containing from 1 to 20 carbon atoms and X is a halogen or an alkyl sulfate,
and pyridinium compounds of Formula III 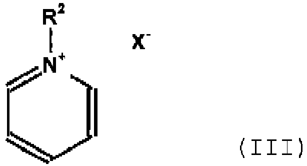 in which R² denotes an alkyl group containing from 1 to 20 carbon atoms and X is a halogen or an alkyl sulfate, with the composition containing an amount of quaterny ammonium compounds of from 0.1 to 5 % by weight and an amount of corrosion inhibitors of from 0.5 to 30 % by weight, each based on the total weight of the composition.

2. The use of the composition as defined in claim 1, **characterized in that** said composition contains an amount of corrosion inhibitors of from 2.5 to 15 % by weight, preferably from 5 to 10 % by weight, based on the total weight of the composition.

3. The use of the composition as defined in claim 1 or claim 2, **characterized in that** the composition contains at least one polyol selected from the group consisting of polyacrylate polyols, polyester polyols, polyether polyols, polycarbonate polyols and polycaprolactones.

4. The use of the composition as defined in claim 1 or claim 2, **characterized in that** the composition contains at least one hydroxy functional polymer selected from the group consisting of polyacrylates, polyesters, polyethers, polycarbonates, polyureas and polyurethanes.

5. The use of the composition as defined in claim 1 or claim 2, **characterized in that** the composition contains at least one epoxy resin selected from the group consisting of bisphenol-A resins, bisphenol-F resins, phenol novolaks, cresol novolac glycidyl ethers, epoxidized cyclic olefins, aromatic glycidyl compounds, N-glycidyl compounds of heterocyclic compounds and amines, glyoxaltetraphenol tetraglycidyl ethers, aliphatic glycidyl ethers, cycloaliphatic glycidyl ethers and aromatic glycidyl ethers.

6. The use of the composition as defined in any one of claims 1 to 5 as an anticorrosive coating for fuel tanks made of aluminium or aluminium alloys.

7. The use of the composition as defined in claim 6 as an internal coating.

## Revendications

1. Utilisation d'une composition comme revêtement anticorrosion pour des réservoirs à carburant, charactérisée en ce que ladite composition contient
- au moins un liant étant choisi parmi les polyols, les polymères à fonction hydroxy ou les résines époxy,
- au moins un durcisseur,
- au moins un inhibiteur de corrosion étant choisi dans le groupe comprenant les phosphates, les silicates, les borates, les molybdates, les inhibiteurs organiques et les oxydes,
- et au moins un composé ammonium quaternaire étant choisi dans le groupe comprenant les composés alkylammonium linéaires de la formule I 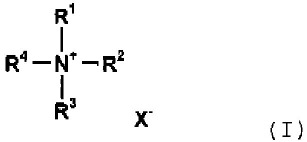 où R¹, R², R³ et R⁴ représentent, indépendamment l'un de l'autre, un radical alkyle de 1 à 20 atomes de carbone et X représente un halogène ou un sulfate d'alkyle,
les composés imidazolium de la formule II 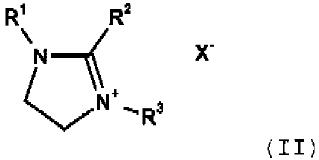 où R¹, R² et R³ représentent, indépendamment l'un de l'autre, un radical alkyle de 1 à 20 atomes de carbone et X représente un halogène ou un sulfate d'alkyle,
et les composés pyridinium de la formule III 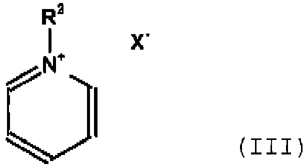 où R² représente un radical alkyle de 1 à 20 atomes de carbone et X représente un halogène ou bien un sulfate d'alkyle, la composition contenant également une quantité de composés ammonium quaternaires de 0,1 à 5 % en poids et une quantité d'inhibiteurs de corrosion de 0,5 à 30 % en poids, chaque quantité étant exprimée par rapport au poids total de la composition.

2. Utilisation de la composition selon la revendication 1, charactérisée en ce que la composition contient une quantité d'inhibiteurs de corrosion de 2,5 à 15 % en poids, de préférence de 5 à 10 % en poids, par rapport au poids total de la composition.

3. Utilisation de la composition selon la revendication 1 ou 2, charactérisée en ce que la composition contient au moins un polyol étant choisi dans le groupe comprenant les polyols de polyacrylate, les polyols de polyester, les polyols de polyéther, les polyols de polycarbonate et les polyols de polycaprolactone.

4. Utilisation de la composition selon la revendication 1 ou 2, charactérisée en ce que la composition contient au moins un polymère à fonction hydroxy étant choisi dans le groupe comprenant les polyacrylates, les polyesters, les polyéthers, les polycarbonates, les polycarbamides et les polyuréthanes.

5. Utilisation de la composition selon la revendication 1 ou 2, charactérisée en ce que la composition contient au moins une résine époxy étant choisie dans le groupe comprenant les résines de bisphénol A, les résines de bisphénol F, les résines phénols novolaques, les éthers glycidyliques de novolaque de crésol, les cyclooléfines époxydées, les composés glycidyliques aromatiques, les composés N-glycidyles de hétérocycles et amines, les éthers tétraglycidyliques de tétraphénolglyoxale, les éthers glycidyliques aliphatiques, les éthers glycidyliques cycloaliphatiques et les éthers glycidyliques aromatiques.

6. Utilisation de la composition selon l'une quelconque des revendications 1 à 5 comme revêtement anticorrosion pour des réservoirs à carburant faits d'aluminium ou d'alliages d'aluminium.

7. Utilisation de la composition selon la revendication 6 comme revêtement intérieur.
